# EUROPEAN PATENT APPLICATION

(11) **EP 3 675 288 A1**
(43) Date of publication of application: **01.07.2020**
(21) Application number: 19216576.9
(22) Date of filing: 16.12.2019
(51) Int. Cl.: H01R 13/58, H01R 13/74

(54) **CABLE FIXING APPARATUS, CABLE CONNECTOR AND ELECTRICAL DEVICE**

(30) Priority: 28.12.2018 CN 201811652612
(71) Applicant: Tyco Electronics (Shanghai) Co., Ltd., Pilot Free Trade Zone Shanghai (CN)
(72) Inventor: WAN, Qingquan, Dongguan,, Guangdong 523071 (CN); SONG, Zhigang, Xuhui District, Shanghai 200233 (CN); CHEN, Jiahui, Xuhui District, Shanghai 200233 (CN); ZHANG, Haibo, Xuhui District, Shanghai 200233 (CN); LIU, Songhua, Dongguan, Guangdong 523071 (CN); WANG, Yunhe, Xuhui District, Shanghai 200233 (CN); LUO, Ji, Dongguan, Guangdong 523071 (CN)
(74) Representative: Grünecker Patent- und Rechtsanwälte PartG mbB

(57) **Abstract**

A cable fixing apparatus adapted to be fixed to one end of a cable (100) includes a first sleeve (1) provided with a first thread portion (11) at a first end thereof; a second sleeve (2) provided with a bottom portion (22), which is formed with a through hole (21) at first end thereof, the cable (100) being inserted into the second sleeve (2) and the first sleeve (1) through the through hole (21) in an insertion direction, and second sleeve (2) being threaded onto the first thread portion (11) at a second thereof; and a clamp mechanism (3) provided in the second sleeve (2) and between the first thread portion (11) of the first sleeve (1) and the bottom portion (22) of the second sleeve (2) to clamp the cable (100) in response to the engagement of the second end of the second sleeve (2) to the first thread portion (11) so as to prevent the cable (100) from moving in the first sleeve (1) and the second sleeve (2). The cable (100) is gradually clamped through a clamp mechanism (3) provided in the second sleeve (2) during the engagement of the second sleeve (2) onto the first sleeve (1). The cable (100) is firmly held within the first sleeve (1) and the second sleeve (2).

## Description

### CROSS-REFERENCE TO RELATED APPLICATION

This application claims the benefit of Chinese Patent Application No. CN201811652612.3 filed on December 28, 2018 in the State Intellectual Property Office of China, the whole disclosure of which is incorporated herein by reference.

### BACKGROUND OF THE DISCLOSURE

### Field of the Disclosure

Embodiments of the disclosure relate to a cable connector, and in particular to a cable fixing apparatus, and a cable connector and an electrical device including the same.

### Description of the Related Art

An electrical device such as a high-speed electrical connector, a photoelectric conversion module and the like needs to be connected with an external cable such as an optical cable or an electric cable through a cable connector during operation. Generally, a tail sleeve is mounted at a portion of the cable, which is connected with the cable connector, to protect the cable from being broken due to multiple times of bending. Furthermore, a protective housing is provided outside the tail sleeve and the cable connector to prevent external impurities such as moisture, dust and the like from entering interiors of the cable connector and the electrical device so as to protect the tail sleeve and the cable.

### SUMMARY OF THE DISCLOSURE

The present disclosure has been made to overcome or alleviate at least one aspect of the above mentioned disadvantages.

The technical problem to be solved by the disclosure is to provide a cable fixing apparatus, and a cable connector and an electrical device including the same, which may firmly connect a cable into the cable connector.

According to one aspect of the disclosure, there is provided a cable fixing apparatus adapted to be fixed to one end of a cable, comprising: a first sleeve provided with a first thread portion at a first end thereof; a second sleeve provided with a bottom portion, which is formed with a through hole at first end thereof, the cable being inserted into the second sleeve and the first sleeve through the through hole in an insertion direction, and second sleeve being threaded onto the first thread portion at a second thereof; and a clamp mechanism provided in the second sleeve and between the first thread portion of the first sleeve and the bottom portion of the second sleeve to clamp the cable in response to the engagement of the second end of the second sleeve to the first thread portion so as to prevent the cable from moving in the first sleeve and the second sleeve.

According to an exemplary embodiment of the disclosure, the clamp mechanism comprises an annular portion sleeved over the cable, and at least two clamp arms each extending from the annular portion in the insertion direction. An inner wall of the second sleeve is provided with an annular press protrusion protruding radially inwardly, and the press protrusion is configured to press the clamp arms to be moved radially inwardly toward each other in response to the engagement of the second end of the second sleeve to the first thread portion of the first sleeve to clamp the cable.

According to an exemplary embodiment of the disclosure, each of the clamp arms is formed as a wedge feature protruding radially outwardly in the insertion direction.

According to an exemplary embodiment of the disclosure, the press protrusion has an inclined surface in contact with the wedge feature.

According to an exemplary embodiment of the disclosure, the annular portion has an opening such that an inner diameter of the annular portion is variable.

According to an exemplary embodiment of the disclosure, an inner side surface of each of the clamp arms is provided with a plurality of projections.

According to an exemplary embodiment of the disclosure, the first sleeve is provided with a holding portion extending from the first thread portion, the holding portion being provided with a plurality of receiving grooves into which the clamp arms are inserted, respectively, to prevent the clamp mechanism from being rotated relative to the first sleeve.

According to an exemplary embodiment of the disclosure, a seal ring is provided at a portion of the first thread portion, which is engaged with the holding portion.

According to an exemplary embodiment of the disclosure, the cable fixing apparatus further comprises a seal member provided between the clamp mechanism and the bottom portion of the second sleeve. The cable passes through the seal member.

According to an exemplary embodiment of the disclosure, the seal member is provided with a plurality of steps.

According to an exemplary embodiment of the disclosure, the cable comprises an optical cable or an electrical cable.

According to another aspect of the disclosure, there is provided a cable connector comprising: a cable fixing apparatus as describe in the above embodiments; a third sleeve provided with a second thread portion at a first end thereof, which is adapted to be engaged with the second end of the first sleeve; and a connector body mounted within the third sleeve, the one end of the cable is connected to the connector body.

According to an exemplary embodiment of the disclosure, the third sleeve comprises a lock mechanism extending from the second thread portion and configured to hold the first sleeve on the third sleeve in the case where the first sleeve is threaded with the third sleeve.

According to an exemplary embodiment of the disclosure, the lock mechanism comprises: at least one cantilever extending from the second thread portion towards the first sleeve, and at least one lock protrusion provided on the at least one cantilever and protruding outwardly, respectively. The first sleeve is provided with at least one lock groove engaged with the at least one lock protrusion, respectively.

According to further another aspect of the disclosure, there is provided an electrical device comprising the cable connector as described in the above embodiments; and a mating connector comprising a shield housing, and an electronic module mounted within the shield housing and configured to be coupled with the cable connector inserted into the shield housing.

According to an exemplary embodiment of the disclosure, the electrical device further comprises a mounting panel on which the third sleeve is mounted.

In the cable fixing apparatus, the cable connector and the electrical device according to embodiments of the disclosure, the clamp mechanism is provided in the second sleeve. Thus, the cable may be gradually clamped during the engagement of the second sleeve to the first sleeve through gradual rotation. In this way, the cable may be firmly held in the first sleeve and the second sleeve to enable reliable connection of the cable with the cable connector.

Other objects and advantages of the disclosure will become apparent from the following description of the disclosure when taken in conjunction with the accompanying drawings, and may give a comprehensive understanding of the disclosure.

### BRIEF DESCRIPTION OF THE DRAWINGS

The above and other features of the disclosure will become more apparent by describing in detail exemplary embodiments thereof with reference to the accompanying drawing, in which:
FIG. 1 is a schematic plan view illustrating an electrical device and a cable connector thereof according to an exemplary embodiment of the disclosure;
FIG. 2 is an axial partial cross-sectional view illustrating the electrical device and the cable connector thereof shown in FIG. 1;
FIG. 3 is a schematic enlarged view of a portion A shown in FIG. 2;
FIG. 4 is a schematic enlarged view of a portion B shown in FIG. 3;
FIG. 5 is a schematic exploded view illustrating the electrical device and the cable connector thereof shown in FIG. 1;
FIG. 6 is a schematic enlarged view illustrating a portion C shown in FIG. 5;
FIG. 7 is a schematic enlarged view illustrating a portion D shown in FIG. 5;
FIG. 8 is a schematic enlarged view illustrating a portion E shown in FIG. 5;
FIGS. 9-12 are side views illustrating an operation for installing a cable fixing apparatus onto the cable connector according to an exemplary embodiment of the disclosure; and
FIG. 13 shows a schematic enlarged view of a portion F shown in FIG. 9.

### DETAILED DESCRIPTION OF PREFERRED EMBODIMENTS OF THE DISCLOSURE

While the disclosure will be fully described with reference to the accompanying drawings containing preferred embodiments thereof, it will be understood by those skilled in the art that the disclosure described herein can be modified while achieving the technical effects of the disclosure before the description. Therefore, it should be understood that the above description is a broad disclosure for those skilled in the art, and its content is not intended to limit the exemplary embodiments described in this disclosure.

In addition, in the following detailed description, for the sake of explanation, numerous specific details are set forth in order to provide a thorough understanding of the disclosed embodiments. It will be apparent, however, that one or more embodiments may also be practiced without these specific details. In other instances, well-known structures and devices are illustrated schematically in order to simplify the drawing.

According to a general technical concept of the disclosure, there is provided a cable fixing apparatus adapted to be fixed to one end of a cable, comprising: a first sleeve provided with a first thread portion at a first end thereof; a second sleeve provided with a bottom portion formed with a through hole at first end thereof, the cable being inserted into the second sleeve and the first sleeve through the through hole in an insertion direction, and the second sleeve being threaded onto the first thread portion at a second thereof; and a clamp mechanism provided in the second sleeve and between the first thread portion of the first sleeve and the bottom portion of the second sleeve to clamp the cable in response to the engagement of the second end of the second sleeve to the first thread portion so as to prevent the cable from moving in the first sleeve and the second sleeve.

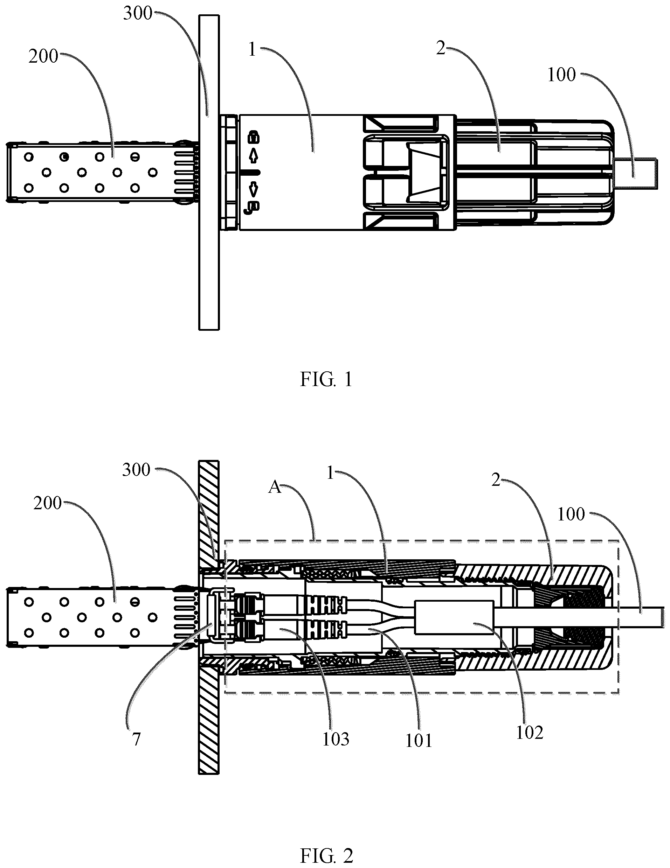

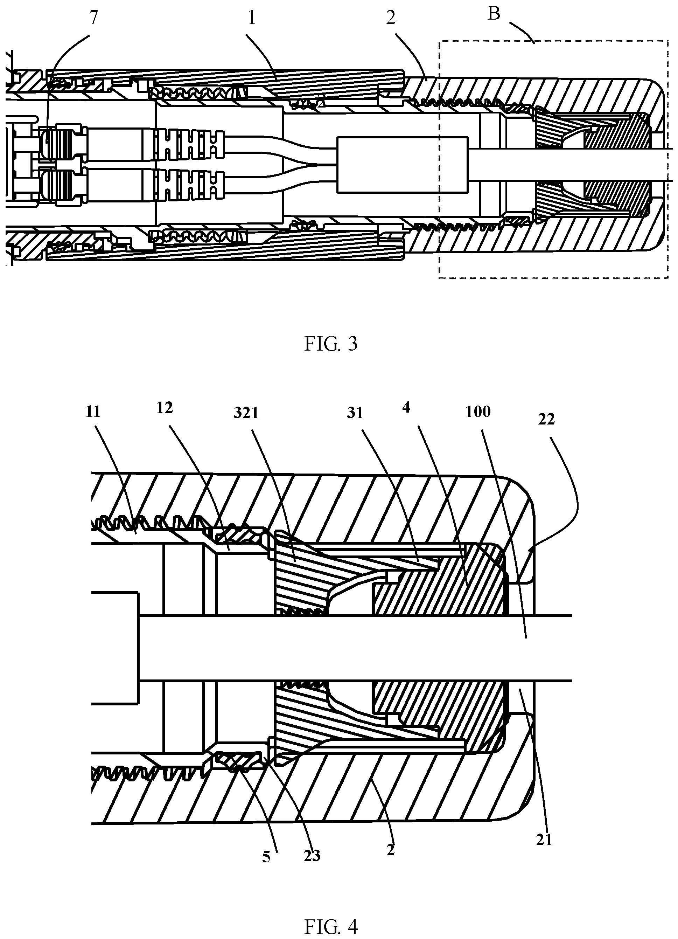

FIG. 1 is a schematic plan view illustrating an electrical device and a cable connector thereof according to an exemplary embodiment of the disclosure, FIG. 2 is an axial partial sectional view illustrating the electrical device and the cable connector thereof shown in FIG. 1, FIG. 3 is a schematic enlarged view of a portion A shown in FIG. 2, and FIG. 4 is a schematic enlarged view of a portion B shown in FIG. 3.

In one exemplary embodiment, as shown in FIGS. 1-4, a cable fixing apparatus adapted to be fixed to one end of a cable 100 comprises a first sleeve 1, a second sleeve 2 and a clamp mechanism 3.

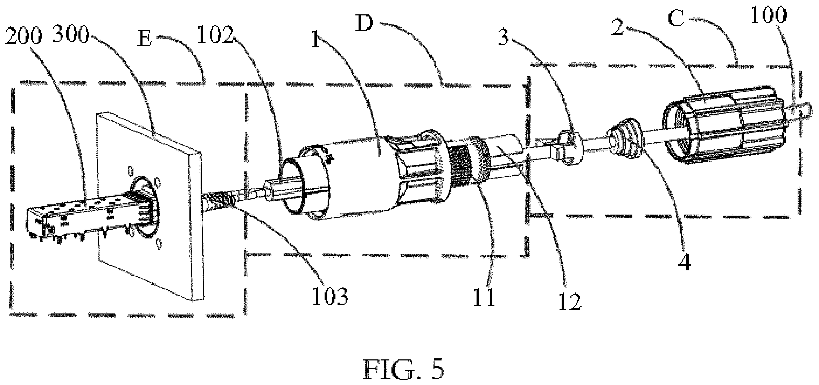

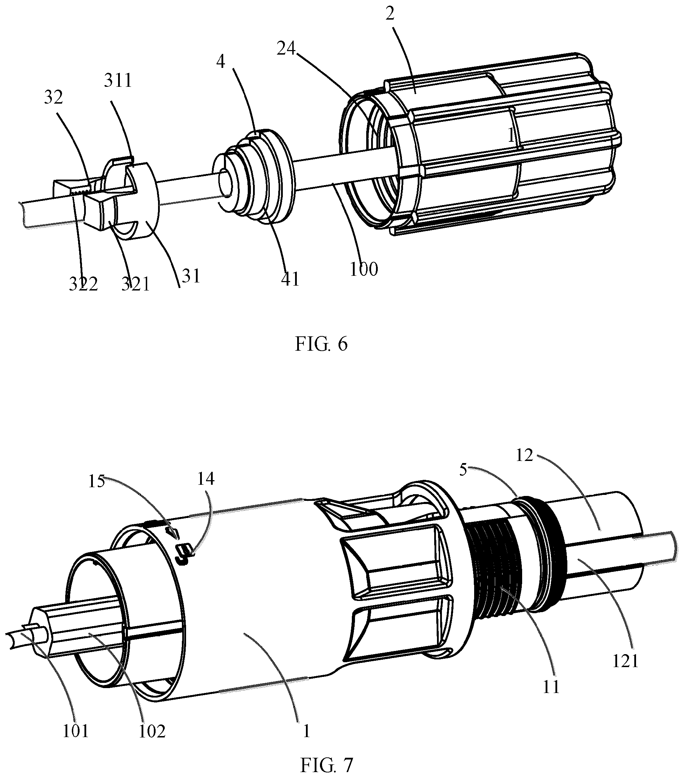

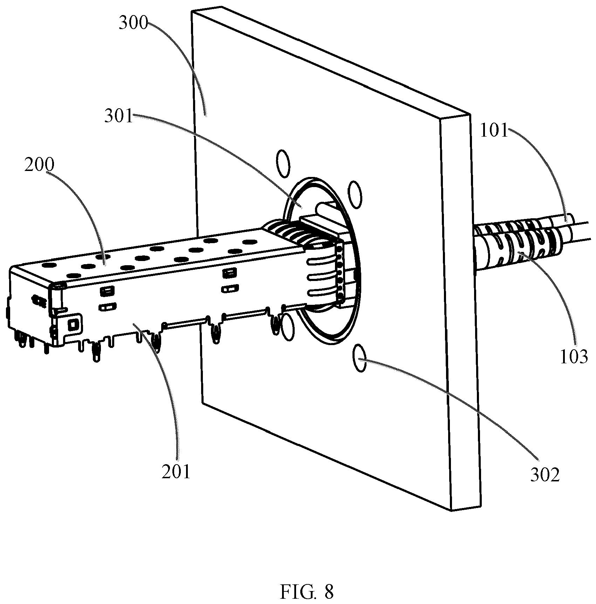

FIG. 5 is a schematic exploded view illustrating the electrical device and the cable connector thereof shown in FIG. 1, FIG. 6 is a schematic enlarged view illustrating a portion C shown in FIG. 5, FIG. 7 is a schematic enlarged view illustrating a portion D shown in FIG. 5, and FIG. 8 is a schematic enlarged view illustrating a portion E shown in FIG. 5.

In one exemplary embodiment, as shown in FIGS. 1-4, the first sleeve 1 is provided with a first thread portion 11 at a first end (the right side in FIG. 2) thereof. For example, the first thread portion 11 is configured as an external thread extending from a body portion of the first sleeve 1. The second sleeve 2 is provided with a bottom portion 22, which is formed with a through hole 21 at first end (the right side in FIG. 2) thereof. One end of the cable to be connected is inserted into the second sleeve 2 and the first sleeve 1 through the through hole 21 in an insertion direction (the right-to-left direction in FIG. 2). The second sleeve 2 is threaded onto the first thread portion 11 by an internal thread portion 24 of the second sleeve 2 at a second end thereof to engage the first sleeve 1 and the second sleeve 2 with each other. Although an embodiment in which the external thread portion of the first sleeve is engaged with the internal thread portion of the second sleeve is illustrated, it will be understood by those skilled in the art that the embodiments of the disclosure are not limited thereto. In an alternative embodiment, an internal thread portion of the first sleeve may be engaged with an external thread portion of the second sleeve.

A clamp mechanism 3 is provided in the second sleeve 2 and between the first thread portion 11 of the first sleeve 1 and the bottom portion 22 of the second sleeve 2 to clamp the cable 100 in response to the engagement of the second end of the second sleeve 2 to the first thread portion 11 of the first sleeve 1 so as to prevent the cable 100 from moving in the first sleeve 1 and the second sleeve 2.

As shown in FIGS. 1-4 and 13 (described in detail below), an embodiment of the disclosure also provides a cable connector comprising the cable fixing apparatus as described above, a third sleeve 6 and a connector body 7. The third sleeve 6 is provided with a second thread portion 61 at a first end (the right side in FIG. 2) thereof. The second thread portion 61 is adapted to be engaged with the second end (the left side in FIG. 2) of the first sleeve 1. The connector body 7 is mounted within the third sleeve 6, and the one end of the cable 100 is connected to the connector body 7.

In one exemplary embodiment, the cable 100 may comprise an optical cable having a plurality of optical fibers 101. Accordingly, the connector body 7 may comprise an optical fiber connector adapted to connect the optical fibers 101. A tail tube 103 is provided at a portion of the optical fiber 101, which is connected to the optical fiber connector, to protect the connection of the optical fiber. Further, a protective tube 102 is provided at a portion of the optical fiber 101, exposing a protective layer of the optical cable 100, to protect the optical fiber 101, and the protective layer which is not removed.

In an alternative embodiment, the cable 100 may comprise an electrical cable 100 having a plurality of wires. Accordingly, the connector body 7 may comprise an electrical connector adapted to connect the wires.

In a state where the cable 100 is connected to the connector body 7, the first sleeve 1 and the third sleeve 6 of the cable fixing apparatus are engaged with each other. Since the cable 100 may be fixed by the cable fixing apparatus, it is possible to prevent the cable 100 from moving in the first sleeve 1 and the second sleeve 2, thereby avoiding failure of the connection of the cable 100 with the connector body 7 and protecting the cable from being damaged.

In one exemplary embodiment, as shown in FIGS. 3-6, the clamp mechanism 3 comprises an annular portion 31 sleeved over the cable 100, and at least two clamp arms 32 each extending from the annular portion 31 towards the first thread portion in the insertion direction. An inner wall of the second sleeve 2 is provided with an annular press protrusion 23 protruding radially inwardly. The press protrusion 23 is configured to press the clamp arms 32 to be moved radially inwardly toward each other in response to the engagement of the second end of the second sleeve 2 with the first thread portion 11 of the first sleeve 1 to clamp the cable 100.

In an exemplary embodiment, each of the clamp arms 32 is formed as a wedge feature 321 gradually obliquely protruding radially outwardly in the insertion direction. Thus, as the second sleeve 2 is engaged to the first sleeve 1 by gradually rotating, the press protrusion 23 gradually presses the clamp arms 32 to be moved radially inwardly towards each other, thereby gradually clamping the cable 100. Further, the press protrusion 23 has an inclined surface in contact with the wedge feature 321, so that the press protrusion 23 is in smooth contact with the wedge feature 321.

In one exemplary embodiment, the annular portion 31 has an opening 311 such that an inner diameter of the annular portion 31 is variable. In this way, it is possible to allow the annular portion 31 to be deformed such that the inner diameter of the annular portion 31 becomes smaller when the clamp arms 32 move radially inwardly towards each other, thereby avoiding undesirable deformation of the annular portion 31 to be occurred. An inner side surface of each of the grip arms 32 is provided with a plurality of projections 322 to allow the cable 100 to be firmly fixed by the clamp arms 32.

In one exemplary embodiment, as shown in FIGS. 3 to 7, the first sleeve 1 is provided with a cylindrical holding portion 12 extending from the first thread portion 11. The cable 100 is inserted into the second sleeve 2 through the holding portion 12. The holding portion 12 is provided with a plurality of receiving grooves 121 into which the clamp arms 32, 32 are inserted, respectively, to prevent the clamp mechanism 3 from being rotated relative to the first sleeve 1. In this way, it is possible for the clamp arms 32 to smoothly clamp the cable 100.

In one exemplary embodiment, as shown in FIGS. 3, 4 and 7, a seal ring 5 is provided at a portion of the first thread portion 11 which is engaged with the holding portion 12. In this way, when the first sleeve 1 is engaged with the second sleeve 2, the seal ring 5 is sandwiched between the first sleeve 1 and the second sleeve 2. Thus, it is possible to prevent external impurities such as moisture, dust and the like from entering an interior of the cable connector from the portion of the first sleeve 1 engaged with the second sleeve 2, thereby improving sealability of the cable connector.

In one exemplary embodiment, the cable fixing apparatus further comprises a seal member 4 provided between the clamp mechanism 3 and the bottom portion 22 of the second sleeve 2. The cable 100 passes through the seal member 4. In this case, the clamp mechanism 3 is located between the first thread portion 11 of the first sleeve 1 and the seal member 4, and the annular portion 31 of the clamp mechanism 3 is abutted against the seal member 4. During engagement of the second sleeve 2 onto the first sleeve 1 by gradually rotating, the seal member 4 is compressed so that the external impurities such as moisture, dust, and the like is prevented from entering the interior of the cable connector from a portion of the cable 100 engaged to the through hole 21 of the second sleeve 2, thereby improving the sealability of the cable connector. In one exemplary embodiment, the seal member 4 is provided with a plurality of steps 41 against which the annular portion 31 of the clamp mechanism 3 is abutted.

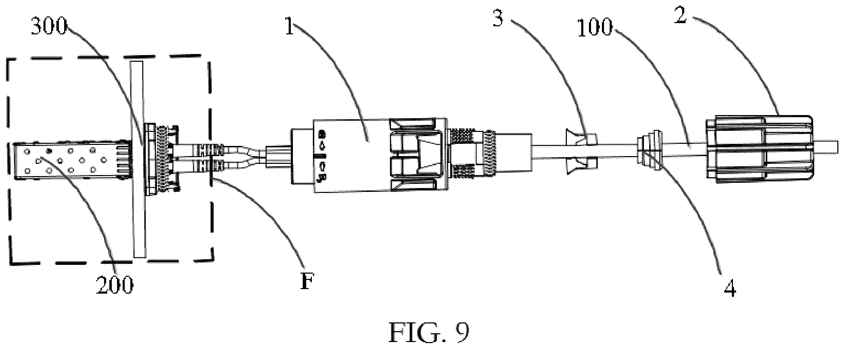

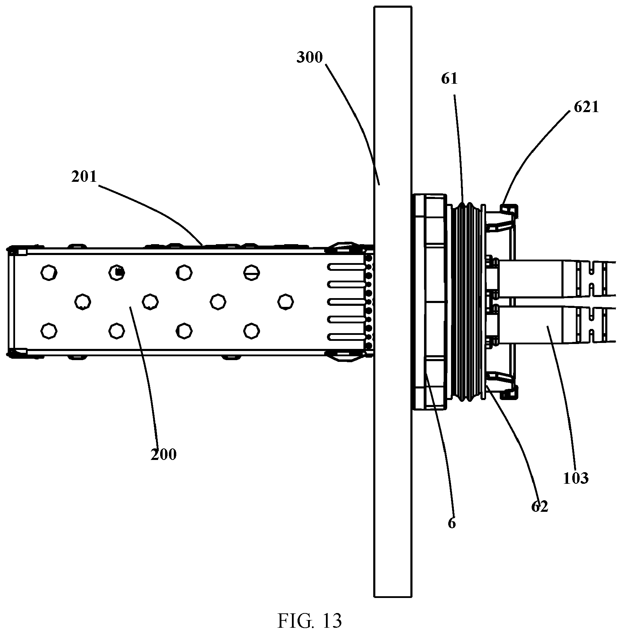

FIGS. 9-12 are side views illustrating an operation for installing the cable fixing apparatus onto the cable connector according to an exemplary embodiment of the disclosure, and FIG. 13 shows a schematic enlarged view of a portion F shown in FIG. 9. FIG. 9 shows a state where the second sleeve 2 is not engaged with the third sleeve 6.

In one exemplary embodiment, as shown in FIGS. 1-3, 7, 9 and 13, the third sleeve 6 comprises a lock mechanism extending from the second thread portion and configured to hold the first sleeve 1 on the third sleeve 6 when the first sleeve 1 is threaded with the third sleeve 6. In detail, the lock mechanism comprises at least one cantilever 62 extending from the second thread portion 61 towards the first sleeve 1; and at least one lock protrusion 621 provided on the at least one cantilever 62 and protruding outwardly, respectively. The first sleeve 1 is provided with at least one lock groove 14 engaged with the at least one lock protrusion 621, respectively. During the engagement of the first sleeve 1 to the third sleeve 6 through a forward rotation, the lock protrusion 621 is engaged into the lock groove 14, which may prevent the first sleeve 1 from being disengaged from the third sleeve 6 by a reverse rotation relative to the third sleeve 6.

As shown in FIGS. 1 to 4, an embodiment of the disclosure also provides an electrical device comprising the cable connector as described above and a mating connector 200 mated with the cable connector. The mating connector 200 comprises a shield housing 201, an electronic module mounted within the shield housing 201 and configured to be coupled with the cable connector inserted into the shield housing 201. In this way, in a case where the electronic module comprises an optical-to-electrical converter, an optical signal transmitted from an optical cable used as the cable 100 may be transmitted to the optical-to-electrical converter through the optical fiber connector to achieve an optical-to-electrical conversion. In a case where the electronic module comprises an mating electrical connector, an electrical signal transmitted from an electrical cable used as the cable 100 may be transmitted to the mating electrical connector through the electrical connector to achieve signal conversion, branching and further transmission of the electrical signal.

In one embodiment, the electrical device further comprises a mounting panel 300 on which the third sleeve 6 is mounted. Further, the mounting panel 300 is provided with a connection through hole 301 through which a cable connector located at one side of the mounting panel 300 (the right side in FIG. 1) is coupled with an electronic module in the shield house 201 located at the other side of the mounting panel 300 (the left side in FIG. 1). On the other hand, the cable connector is mounted on the mounting panel 300 through a through hole 302 formed in the mounting panel 300.

An mounting process of an electrical device according to embodiments of the disclosure will be described below by taking a fiber optic connector used as a cable connector as an example with reference to FIGS. 9 to 12 and FIG. 1. As shown in FIG. 9, firstly, an electronic module of a mating connector 201 is mounted within a shield housing 201. A cable connector is then inserted into the shield housing partially to be coupled with the electronic module, and the cable connector is mounted on a mount panel 300. Thereafter, a protective layer of an optical cable used as the cable 200 is cut away to expose an optical fiber 101. Then, a second sleeve 2, a sealing component 4, a clamp mechanism 3, a first sleeve 1, a protection tube 102 and a tail sleeve 103 are sleeved over the optical fiber 101. Finally, the optical fiber 101 is connected to a fiber connector.

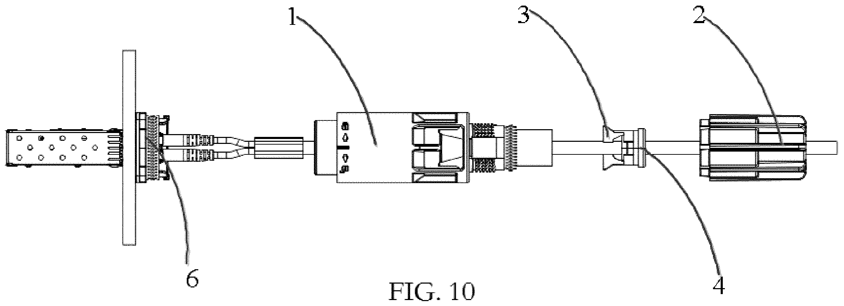

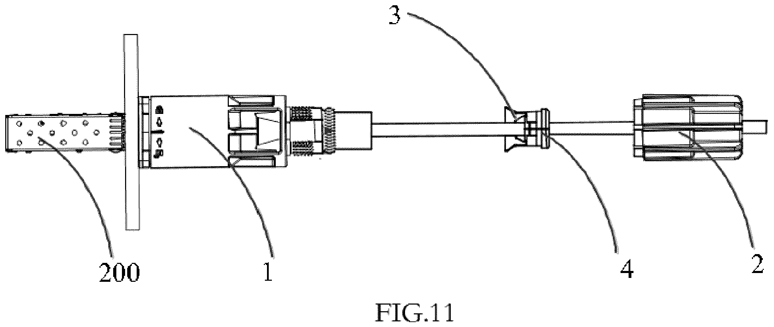

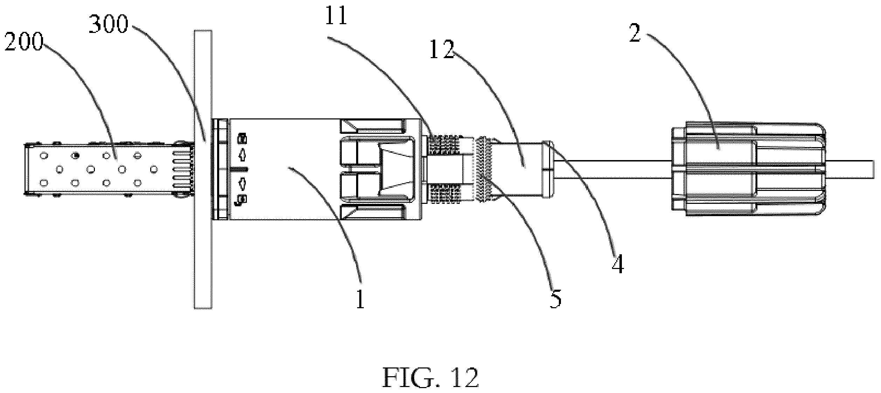

Thereafter, as shown in FIG. 10, the seal member 4 and the clamp mechanism 3 are coupled with each other. As shown in FIG. 11, the first sleeve 1 is engaged to the third sleeve 6. Thereafter, as shown in FIG. 12, the clamp arms 32 of the clamp mechanism 3 coupled with the seal member 4 are inserted into the receiving grooves 121 of the holding portion 12 of the first sleeve 1. Finally, the second sleeve 2 is threaded onto the first sleeve 1, so that the electrical device as shown in FIG. 1 is assembled.

In the cable fixing apparatus, the cable connector and the electrical device according to embodiments of the disclosure, the clamp mechanism is provided in the second sleeve. Thus, during the engagement of the second sleeve 2 to the first sleeve 1 through gradual rotation, the clamp arms of the clamp mechanism are moved radially inwardly toward each other, thereby gradually clamping the cable. Therefore, the cable may be firmly held in the first sleeve and the second sleeve, thereby avoiding an axial movement of the cable due to an external force. Further, it is possible to enable rapid assembly and disassembly of the electrical device without any auxiliary tool. Furthermore, it is possible to ensure reliable connection of the cable and the cable connector.

It should be appreciated by those skilled in this art that the above embodiments are intended to be illustrative, and many modifications may be made to the above embodiments by those skilled in this art, and various structures described in various embodiments may be freely combined with each other without conflicting in configuration or principle, so that more product combinations are realized when solving the technical problem of the disclosure.

Although the disclosure have been described hereinbefore in detail with reference to the attached drawings, it should be appreciated that the disclosed embodiments in the attached drawings are intended to illustrate the preferred embodiments of the disclosure by way of example, and should not be construed as limitation to the disclosure.

After describing the preferred embodiment of the disclosure in detail, it should be understood by those skilled in the art various changes and modifications may be made without departing from the spirit and scope of the appended claims, and the disclosure is not limited to the implements of the exemplary embodiments set forth in the description.

## Claims

1. A cable fixing apparatus adapted to be fixed to one end of a cable (100) **characterized by** comprising:
a first sleeve (1) provided with a first thread portion (11) at a first end thereof;
a second sleeve (2) provided with a bottom portion (22), which is formed with a through hole (21) at first end thereof, the cable (100) being inserted into the second sleeve (2) and the first sleeve (1) through the through hole (21) in an insertion direction, and second sleeve (2) being threaded onto the first thread portion (11) at a second thereof; and
a clamp mechanism (3) provided in the second sleeve (2) and between the first thread portion (11) of the first sleeve (1) and the bottom portion (22) of the second sleeve (2) to clamp the cable (100) in response to the engagement of the second end of the second sleeve (2) to the first thread portion (11) so as to prevent the cable (100) from moving in the first sleeve (1) and the second sleeve (2).

2. The cable fixing apparatus according to claim 1, **characterized in that** the clamp mechanism (3) comprises:
an annular portion (31) sleeved over the cable (100); and
at least two clamp arms (32, 32) each extending from the annular portion (31) in the insertion direction, and
wherein an inner wall of the second sleeve (2) is provided with an annular press protrusion (23) protruding radially inwardly, and the press protrusion (23) is configured to press the clamp arms (32, 32) to be moved radially inwardly toward each other in response to the engagement of the second end of the second sleeve (2) to the first thread portion (11) of the first sleeve (1) to clamp the cable (100).

3. The cable fixing apparatus according to claim 2, **characterized in that** each of the clamp arms (32, 32) is formed as a wedge feature (321) protruding radially outwardly in the insertion direction.

4. The cable fixing apparatus according to claim 2 or 3, **characterized in that** the press protrusion (23) has an inclined surface in contact with the wedge feature (321).

5. The cable fixing apparatus according to any one of claims 2 to 4, **characterized in that** the annular portion (31) has an opening (311) such that an inner diameter of the annular portion (31) is variable.

6. The cable fixing apparatus according to any one of claims 2 to 5, **characterized in that** an inner side surface of each of the clamp arms (32, 32) is provided with a plurality of projections (322).

7. The cable fixing apparatus according to any one of claims 2 to 6, **characterized in that** the first sleeve (1) is provided with a holding portion (12) extending from the first thread portion (11), the holding portion (12) being provided with a plurality of receiving grooves (121) into which the clamp arms (32, 32) are inserted, respectively, to prevent the clamp mechanism (3) from being rotated relative to the first sleeve (1).

8. The cable fixing apparatus according to claim 7, **characterized in that** a seal ring (5) is provided at a portion of the first thread portion (11), which is engaged with the holding portion (12).

9. The cable fixing apparatus according to any one of claim 1 to 8, **characterized by** further comprising a seal member (4) provided between the clamp mechanism (3) and the bottom portion (22) of the second sleeve (2), the cable (100) passing through the seal member (4).

10. The cable fixing apparatus according to claim 7, **characterized in that** the seal member (4) is provided with a plurality of steps (41).

11. A cable connector **characterized by** comprising:
a cable fixing apparatus according to any one of claims 1 to 10;
a third sleeve (6) provided with a second thread portion (61) at a first end thereof, which is adapted to be engaged with the second end of the first sleeve (1); and
a connector body (7) mounted within the third sleeve (6), the one end of the cable (100) is connected to the connector body (7)

12. The cable connector according to claim 11, **characterized in that** the third sleeve (6) comprises a lock mechanism extending from the second thread portion and configured to hold the first sleeve (1) on the third sleeve (6) in the case where the first sleeve (1) is threaded with the third sleeve (6).

13. The cable connector according to claim 12, **characterized in that** the lock mechanism comprises:
at least one cantilever (62) extending from the second thread portion (61) towards the first sleeve (1); and
at least one lock protrusion (621) provided on the at least one cantilever (62) and protruding outwardly, respectively,
wherein the first sleeve (1) is provided with at least one lock groove (14) engaged with the at least one lock protrusion (621), respectively.

14. An electrical device **characterized by** comprising:
the cable connector according to any one of claims 11 to 13; and
a mating connector (200) comprising:
a shield housing (201); and
an electronic module mounted within the shield housing (201) and configured to be coupled with the cable connector inserted into the shield housing (201).

15. The electrical device according to claim 14, **characterized by** further comprising a mounting panel (300) on which the third sleeve (6) is mounted.
